# EUROPEAN PATENT APPLICATION

(11) **EP 2 420 938 A1**
(43) Date of publication of application: **22.02.2012**
(21) Application number: 09843414.5
(22) Date of filing: 16.10.2009
(51) Int. Cl.: G06F 15/76, G06F 21/20

(54) **COMPUTER ARCHITECTURE WITH SELF-CONTAINED MODULES**

(30) Priority: 16.04.2009 RU 2009114531
(71) Applicant: Palchenko, Nikolay Ivanovich, Murmansk 183034 (RU)
(72) Inventor: Palchenko, Nikolay Ivanovich, Murmansk 183034 (RU)
(74) Representative: Peckmann, Ralf
(86) International application number: PCT/RU2009/000549
(87) International publication number: WO 2010/120205

(57) **Abstract**

The invention relates to the structure, data links and the interconnection of the main logical sections of a computer. The computer architecture consists of N self-contained modules that are connected with the aid of switches to the bus of one or N terminals via a bus corresponding to each module, each module comprises a central processor, a main memory, drives, input-output devices, peripheral items, a bus and a software. The specific features of the other variants of a computer architecture are that the software to be loaded for execution in the main memory of the module is stored entirety or in part on drives which, during the operation of the module, are in a hardware "read-only" mode and in that the software is loaded in the core memory of the module either in advance prior to the operation of the module, or in the module core memory during the operation thereof or in part in the core memory of the module prior to the module operation and in part in the core memory of the module during the operation thereof. The technical result is the protection of the computer against viruses and unauthorized copying of the software.

## Description

The invention relates to a structure, data links and interconnection of the main logic units of a computer and is designed for protecting a computer from malware (viruses), protecting software from unauthorized copying, as well as for utilizing the computer processor power, memory and other equipment in an optimized way in solving specific tasks.

The claimed architecture may be used not only for personal computers, but also for file servers, Internet servers and for constructing computers of any class, including big machines.

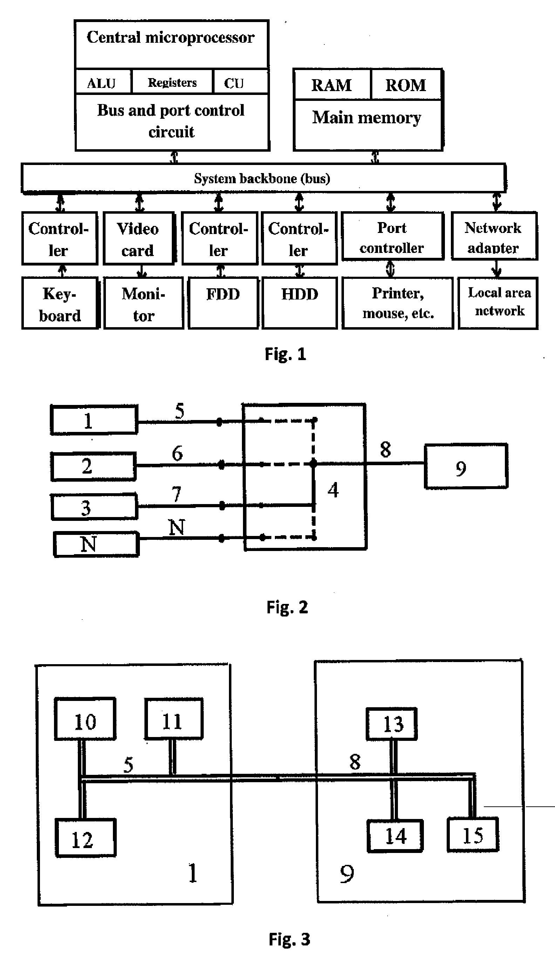

Classic computer architectures are known and widely used (Von Neumann's architectures). This architecture type also includes an architecture of a modem personal computer (PC) (see Fig. 1), comprising a processor (central micro-processor with an arithmetic and logic unit (ALU) and a control unit (CU)), a main memory unit consisting of system memory (RAM) and permanent storage (ROM) or programmable read-only memory (PROM), external storage or data storage units (drives) and external or peripheral units (input/output and communication devices).

The PC main unit is a motherboard defining a configuration. All the PC plug-in units are connected to such a motherboard through connectors or slots arranged on this board. All the units are combined into a single system through a system backbone (bus) representing links for transmitting data, addresses and control commands. External units, i.e., a keyboard, a display, external storage units, a mouse, a printer, etc., are connected through controllers, adapters, cards.

A computer multiprocessor architecture with several processors and an architecture with parallel processors are known, wherein many data flows and many command flows may be organized, and several fragments of a task may be executed in parallel. The structure of such machines has a common RAM and several processors. Computers of these types are designed for increasing an operation speed, power and finding solutions for various specialized tasks.

One disadvantage of all the modem computers is the principal possibility of starting malicious programs (viruses) that are not authorized by the user and that may perform various harmful actions, e.g., destroy useful information, steal important data, etc.

The main means for protecting a PC from viruses still remain anti-virus programs that ensure detection of viruses and recovery of affected programs and files.

However, it can be seen in the practice that the existing hardware and software may not provide reliable protection from new generations of viruses, since a virus, in its essence, is a typical program stored, as a rule, on PC drives, loaded into RAM for execution and having access practically to any PC resources, including drives, RAM, network resources, etc. Therefore, a PC lacks 100% capability of distinguishing a virus from the other PC software. This work can be done by an anti-virus program that initially recognizes a program as a virus and then starts eliminating it. No universal anti-virus programs are available now. As a rule, first a new virus appears, which attracts the attention of an anti-virus program developer, the latter studies the virus, defines methods for eliminating it and implements such methods in a next version of the anti-virus program.

Therefore, in order to fight viruses more efficiently and get the possibility of protecting a PC from viruses in a preventive way, it is necessary to change the existing PC architecture.

The objective of this invention is to develop a reliable system for protecting a personal computer from virus spreading to and infecting it, to develop a system that can significantly hamper a violator from copying a given software in an unauthorized way and develop a system using the processor power, memory and the other computer equipment more efficiently in performing specific tasks.

The technical effect of the invention is the creation of a new computer architecture, which provides reliable preventive protection from spreading viruses, protection from harming programs and files, preventing confidential information from leaking, and from other malicious actions of viruses, up to complete elimination of malicious effects of viruses to a computer.

The technical effect of this invention also consists in a system providing the possibility of installing and functioning PC software, which can significantly hamper unauthorized copying software of a PC.

Further, the technical effect of the invention is a system providing the possibility of selecting and using the central processor, memory and the other computer equipment in performing specific tasks in a more optimal way.

The above technical effect is achieved due to the fact that the proposed architecture comprises N self-contained modules connected through one or N switches via a respective bus (buses) to the bus of one or N terminals, wherein each module comprises a central processor, the main memory, drives, input/output (I/O) devices, peripherals, a bus and software, each terminal comprises an I/O device and peripherals connected to the terminal bus, each module exchanging data only with a terminal or N terminals which can be cooperated with through a switch or N switches, where N=2,3,4...

Also, the technical effect is achieved due to the fact that the architecture comprises N self-contained modules switched through one or N switches via a bus corresponding to a respective module to the bus of one or N terminals, wherein each module comprises a central processor, the main memory, drives, I/O devices, peripherals, a bus and software, each terminal comprises an I/O device and peripherals connected to the terminal bus, each module exchanging data only with a terminal or N terminals which can be cooperated with through a switch or N switches, and software, which intended for loading a module for execution into the main memory, is fully or partially stored on drives that are in the read-only mode during the module operation, where N=2, 3,4...

Also, the technical effect is achieved due to the fact that the architecture comprises N self-contained modules connected through one or N switches via a bus corresponding to a respective module to the bus of one or N terminals, wherein each module comprises a central processor, the main memory, drives, I/O devices, peripherals, a bus and software, each terminal comprises I/O devices and peripherals connected to the terminal bus, each module exchanging data only with a terminal or N terminals which can be cooperated with through a switch or N switches, the module software being fully or partially loaded into the part of the module main memory before it starts operating, which is used in the read-only mode during the module operation, a part of the software, which is not loaded into the module main memory in advance and which is used in the read-only mode during the module operation, either is loaded into the module RAM before the module starts operating, or is loaded into the module RAM during the module operation, or is partially loaded into the module RAM and in partially loaded into the module RAM during the module operation, where N=2, 3,4..., wherein the module software intended for loading into the module memory before the module starts operating may be stored on drives being in the hardware read-only mode during the module operation. And the module software intended for loading into the module memory before the module starts operating may be stored on drives that are used for preliminary loading of the module software into the module memory only before the module starts operating.

There exists the possibility of loading into the main module memory only those programs that are initially included into the software of a given module, before the module starts operating.

A switch or N switches may be controlled by the switch module or N switch modules.

A terminal or N terminals may be controlled either by the switch module, or N switch modules, or the terminal module, or N terminal modules.

A module may be connected to a terminal through a switch, and data exchanges between the module and the terminal may be carried out by direct connection of the module bus to the terminal bus and/or through a gateway arranged in the switch, wherein the gateway processes data received from the module and sends it to the terminal as well as processes data received from the terminal and sends it to the module.

There exists an embodiment wherein the module I/O devices comprise I/O devices accessible by the terminal I/O devices and I/O devices not accessible by the terminal I/O devices, and the module I/O devices not accessible by the terminal I/O devices may be accessible only by the I/O devices of this module.

The terminal I/O devices may comprise drives accessible by the software of some or other modules having access to that terminal.

The terminal functions may be delegated to a certain module or to its I/O devices.

The module bus and the terminal bus may consist of several parallel channels via which data for I/O devices of different types is transferred.

A module may be provided with an intermediate video controller used for preparation and sending of data from the module to the terminal to a standard or input video controller of a display device.

A terminal may be provided by an input video controller of a display device receiving information from the module intermediate video controller.

There exists an embodiment, wherein modules may be connected to the system by a wire and/or wireless method.

An analysis of retrieved information source shows that the claimed totality of essential features is not known in the art, which proves that the claimed solution complies with the criterion of "novelty".

Since the claimed totality of essential features enables to obtain a new technical effect different from that provided by the known computer architectures, it may be stated that the claimed technical solution complies with the criterion of "inventive step".

The essence of the invention is explained on diagrams that show: Fig. 1 - an architecture of a modem PC, Fig. 2 - a general outlay of the claimed computer architecture, Fig. 3 - a diagram of a module and a terminal, Fig. 4 - a control diagram for a switch and a terminal, Fig. 5 - a diagram of a PC with N switches and N terminals, Fig. 6 - a diagram of a PC with simultaneous module control for a switch and a terminal, Fig. 7 - direct connections between the module buses and the terminal bus, Fig. 8 - gateway connections between the module buses and the terminal bus, Fig. 9 - a diagram of connections in the combined mode, Fig. 10 - a diagram of outputting information on display devices in the "module-terminal" mode, Fig. 11 - a diagram of outputting information on display devices in the "module-display" mode, Fig. 12 - a diagram of outputting information on display devices in the "module-switch" mode, Fig. 13 - a diagram of outputting information on display devices in the "controller-controller" mode, Fig. 14 - a diagram of an embodiment of the computer inner arrangement according to the claimed architecture.

The architecture of the claimed computer (see Fig. 2) is a system comprising N parallel, self-contained modules that do not perform direct data exchanges, e.g., Module 1, Module 2, Module 3 and Module N, which are connected through a special device, i.e., a switch 4, via the respective buses (or system backbones) 5, 6, 7... N and the buses 8 of one or N terminals 9. That is, a computer constructed according to the claimed architecture represents a system consisting of M number of computing devices that know nothing of each other and have common I/O devices, i.e., terminals.

The design approach for modules and terminals is explained below on modem commercial computers taken as an example.

A conventional PC is separated into two parts according to the Von Neumann's architecture: Module 1, for example, and Terminal 9. The module 1 represents a central processor 10, a memory 11, I/O controllers of drives 12, which are all combined in a system (see Fig. 3).

The other PC elements, i.e., I/O device controllers for a keyboard 13, a mouse 14, a video monitor or display unit 15, a network and other external devices, are combined in a system hereinafter called "terminal" - Terminal 9.

One of the distinguishing features of this invention is the availability of a respective bus for each module and each terminal: the module bus 7, for example, and the terminal bus 8.

The main difference between the Von Neumann's architecture and the claimed architecture is sharing information flows between PC certain programs and units.

This is achieved owing to the fact that the claimed architecture is based on the following main features or approaches:

The modular approach: the architecture comprises potentially unlimited number (N, where N=1,2,3,4...) of parallel modules operating autonomously and N-number of terminals (Fig. 2). The parallelism of the modules means that they do not exchange data between each other. The "self-contained module" means that each module operates autonomously as a single personal computer, i.e., it has its own processor, memory, etc.

The modules 1, 2, N exchange data with the terminal 9 through a special device, i.e., a switch 4, which receives and processes a data flow from the module N and sends it to the terminal 9.

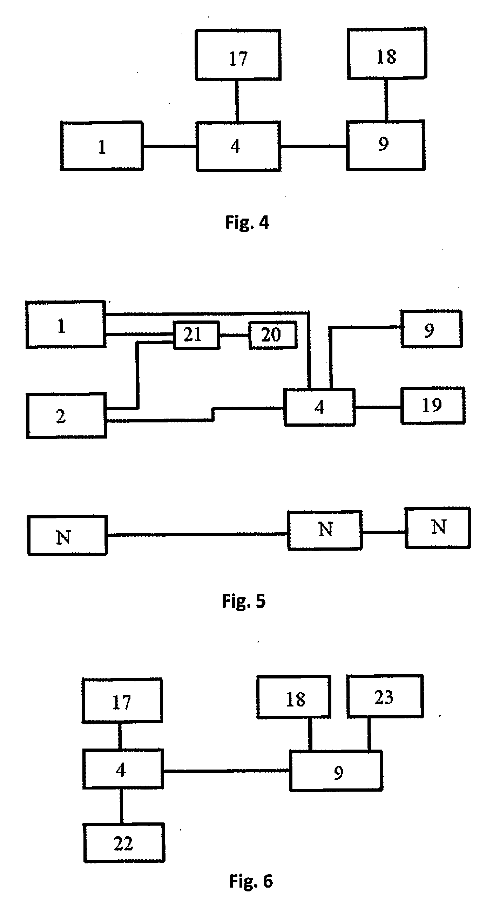

The modular control approach for a switch: the switch 4 is under control of a special module 17 (switch module) which is a separate module and may exercise control over not only the switch 4, but also the terminal 9 (Fig. 4).

The modular control approach for a terminal: a terminal may be controlled also by a separate module 18 (terminal module) that directly controls the terminal 9 (Fig. 4).

The approach of a plurality of terminals: the claimed architecture may comprise a potentially unlimited number of terminals - 9, 19, N (Fig. 5).

The approach of a plurality of switches: the claimed architecture may comprise a potentially unlimited number of switches - 4, N (Fig. 5).

The approach of local terminals: each module 2 or a group of modules 1, 2 may have its own terminal 19 (or terminals 9, 19, 20) and, respectively, their own switches 4, 21 (Fig. 5).

The multiple control approach for switches and terminals: switch modules and terminal modules may control not only one switch and terminal, but also a plurality of them.

The approach of simultaneous modular control over switches and terminals: the claimed architecture contemplates that control over switches 4 and terminals 9 may be exercised simultaneously by different switch modules - 17, 22 and terminal modules -18, 23 (Fig. 6).

The approach of combined parallel buses: a module bus and terminal bus may consist of several parallel channels. For example, an information transfer channel intended for displaying video information may be allocated.

The approach of wireless connection between a module and the system: either module may be connected to the system by a wireless connection.

In order to ensure safety of a PC from harmful effects of viruses, the following main approaches for information links within the claimed computer architecture are established:

The approach of self-contained modules: no possibility exists for data exchanges in software between modules of such a PC, that is, a program initiated in one module of the PC has no access to the memory and drives of another PC module.

The approach of self-contained modules is achieved, *inter alia,* by compliance with the following approaches:

The approach of self-contained memory: the memory of each module (RAM and ROM) is accessible by the central processor and I/O devices, including those having direct access to the memory, e.g., a hard drive controller, of that module only.

The approach of self-contained I/O devices: the input/output devices of each module are accessible by the central processor of that module only.

The approach of self-contained processor: a module central processor may work with the memory and the I/O devices of that module only. This approach mirrors and strengthens the two preceding approaches. File exchanges between modules through a terminal are possible.

The approach of self-contained software: programs, which work with the same data stored on the same drives of a module, should reside within that module.

Further, the following approaches are established:

The approach of storing module software on drives operating in the read-only mode: the module software is stored on drives operating in the read-only mode, information on which may not be modified by a software method.

The approach of pre-loading: any program is loaded into the module memory (into RAM or ROM) in advance before that module starts operating, the module central processor may work only with a program that is loaded into the module memory in advance, and the module operational system may not load any other programs for execution (e.g., downloaded from the Internet), except for those loaded into the module memory in advance.

The approach of file exchanges through a terminal: a terminal may comprise drives accessible by either module during connection.

The approach of limiting the operation of command interpreters: the manufacturer and the supplier of module software should notify the user accordingly, if a module is supplied with software including so called script programs (i.e., programs stored on drives in the form of text (as a rule) commands that are further processed by a special interpreter and executed with the use of a program code already loaded into the module memory, rather than in the form of a binary code to be loaded into the memory). This is provided for due to the fact that some interpreters translate a specific command of a script program into binary code, load the latter into the computer memory and execute it; however, according to the claimed architecture, this approach of the interpreter operation contradicts to the approach of preliminary loading according to which program binary code is loaded into the module memory in advance, and additional loading of any other program code is not allowed.

### Computer input/output devices (I/O devices)

As in a conventional PC, all I/O devices, as a rule, have each its own controller exercising control over that device. Depending on the making, I/O devices are subdivided into integral ones and distributed ones. An integral I/O device is an I/O device which controller and the I/O device itself are completely either in a module, or in a terminal. A distributed I/O device is an I/O device which controller (or a part of it) is in some or other module, and the I/O device itself (and, possibly, the "remaining" part of the controller also) are in a terminal. According to the PC claimed architecture, as in a conventional PC, all I/O devices capable of changing a part of them (e.g., drives) also keep this capability.

I/O devices are subdivided into I/O devices of a module (IODMs) and I/O devices of a terminal (IODTs).

IODMs are subdivided into internal IODMs and external IODMs. The internal IODMs are I/O devices arranged inside a module, the same devices are external for a terminal. External IODMs are I/O devices arranged inside a terminal. IODMs may be also subdivided into invisible IODMs and visible IODMs. Invisible IODMs are IODMs that are invisible for IODTs, for example, special backup data storages, drives used for booting an OS, etc., and the user has no access to those I/O devices, using I/O devices of a terminal.

Access to invisible IODMs is obtained through a special method having hardware component, for example, through connection of a keyboard, a mouse and a display unit directly to a module or through another method.

All the other IODMs are visible. Hereinafter, IODMs are understood as visible IODMs.

IODMs are also subdivided into continuous and reconnectable. Continuous IODMs are visible IODMs that may be in the mode of continuously exchanging data with a terminal. This mode is called continuous. An example of such an I/O device may be a video controller for a display unit. Reconnectable IODMs are IODMs operating only in the intermittent mode, wherein an IODM is connected to a terminal intermittently, rather than continuously.

### I/O Devices of a Terminal (IODTs)

Similarly to IODMs, IODTs are subdivided into external and internal. Internal IODTs are IODTs inside a terminal (for example, a keyboard or mouse). External IODTs are I/O devices inside either module.

IODTs may be control; these are IODTs used for direct input of user commands to a computer (dialogue mode). These are a keyboard, mouse, manipulators, etc.

If the above-mentioned control I/O devices are connected directly to a module, then these I/O devices are called control IODMs.

### Switch (S) 4

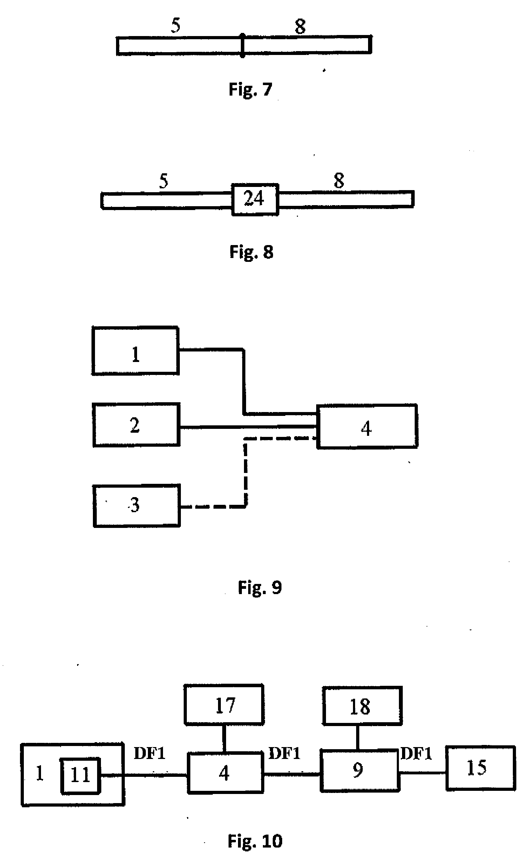

A switch 4 (see Fig. 2) is a hardware or hardware and software device controlling connections between modules 1,2,3 N to a terminal 9. Connection is a process enabling either module to exchange data with a 9. Fig. 1, for example, shows that in this time the switch 4 connects the module 3 to the terminal 9. Depending on the type of a particular switch 4 and a PC setup, connections may be of the following types: direct, gateway and combined. At a direct connection (Fig. 7) the module bus 5 is directly connected to the terminal bus 8. At a gateway connection (Fig. 8) a switch 4 comprises a special gateway 24 that receives a data flow from a module, processes it in a special way and sends it to a terminal. A combined connection (Fig. 9) combines the two above types. Either module may be connected to a terminal in a direct or gateway method, depending on settings.

There exist parallel, serial and combined modes of connecting modules 1,2,3... N to a terminal 9. The parallel mode allows simultaneous connection of several modules 1,2,3... N to a terminal 9. In the serial mode modules 1,2,3... N are connected to a terminal 9 alternately. The combined mode allows that some modules are connected to a terminal serially, and the other in parallel. Fig. 9 shows that the modules 1 and 2 are connected in the parallel mode, and the module 3 is connected in the serial mode.

The switch operation is controlled by a separate module (switch module) that is a conventional module comprising software controlling the switch operation.

### Description of a module and individual components thereof (see Fig. 3)

A module 1 comprises the following main components:
- the module central processor (MCP) 10,
- the module memory (MM) 11 that is similar to memory of a conventional PC,
- internal input/output devices (IODMs), in particular, module drives (MD) 12,
- external IODMs, i.e., I/O devices arranged in a terminal fully or partially and connected to that module at a given time (for example, 13, 14 and 15),
- module software (MSW),
- the module bus (MB) 5.

### Data Exchange within a module

The module 1 is a device similar to a computer (without a keyboard, a mouse, video and other input/output devices), to which memory 11 (MM) a program (or several programs) is loaded that is executed by the central processor 10 (MCP), and continuous data exchanges (both unidirectional and bi-directional) are going on between MM 11 and IODMs 12 (in particular, module drives (MOs)).

The module 1 is connected to the bus 8 through a switch (not shown in the diagram), and the bus allows access of the keyboard 13, the mouse 14 and the I/O devices of the terminal 9 to the module 1.

Either module may be connected to the system through connectors (slots) as well as by a wireless method.

In the time of connecting the module 1 to the terminal 9 not all IODMs exchange data with the IODTs. In one embodiment of the computer some or other IODMs may have the possibility of deciding independently whether they should or should not be connected to the terminal. Further, a computer operating principle is supposed, according to which some or other IODMs may have the possibility of exchanging information flows with particular IODTs in parallel. Thus, a video information flow may be realized, for example.

Data exchange between the module 1 and the terminal 9 goes in the closed and/or the active operation modes of the I/O devices of the module 1. The active operation mode of IODMs means that I/O devices exchange data with the terminal 9 at a given time. The closed operation mode of IODMs means that an I/O device is not connected to the terminal 9 at a given time and exchanges data with the devices of that module 1 only.

A computer operating principle is possible, wherein at a given time some IODMs are in the active mode, and the other in the closed mode. For example, at a given time the module memory 11 (MM) intensively exchanges data with the module drives 12 (MDs), and results of an executed program of the module 1 are outputted to the display unit 15 connected to the terminal 9, and the keyboard 13 connected to the terminal 9 operates (exchanges data) with another module. In such a case an IODM responsible for outputting information to the display unit operates in the active mode, and, simultaneously with it, MDs operate in the closed mode.

Modules may operate in the active mode and in the closed mode. The mode, wherein data is transferred from any control IODT to a given module, is called the active mode of the module operation. The mode, wherein data is not transferred to a given module from any control IODT, is called the closed mode of the module operation.

Module drives 12 (MDs) are storage devices conventional for a PC (hard discs, flash-discs, SD, Memory Stick, etc.). MDs of the claimed architecture may be of the following types (not shown in the diagrams): a module system drive (MSD), a module program drive (MPD) and a module data drive (MDD). Logically, MSD and MPD are combined under the name "module software drive" (MSWD). The maker may provide that a MSWD may operate both in the read-only mode, which means that there is no program opportunity for modifying data on a MSWD, and in the conventional read/write mode with certain limitations. When a MDD operates in the conventional read/write mode, the possibility of changing module drives for each module without changing the module itself is provided for.

The module memory 11 (MM) is subdivided into RAM and ROM (MRAM and MROM). A program (or programs) and data for execution is loaded into the module memory. MROM may be permanent, but with the possibility of rewriting in a special way with the use of suitable contemporary technologies. MRAM is conventional working memory of a computer. Contrary to an architecture of a conventional PC, the maker of a module may implement preliminary (before starting module operation) loading of the module software (complete or a part) into MROM with the possibility of rewriting in a special way.

The module central processor 10 (MCP) is a processor similar to a processor of a conventional PC, smart-phone, palmtop computer or tablet computer, etc.

Each module comprises pre-installed software or a software package (MSW). MSW may either be preliminarily loaded into the module ROM, or be stored on drives and then loaded into the module RAM or ROM.

The module software consists of the module operational system (MOS) and user programs. MOS performs functions typical for a personal computer OS, namely, it organizes the drive file systems, interaction with peripherals, etc. Modules may have different OSs, but data exchanges with a terminal should be in accordance with a single specification. A MOS may include another software, for example, that for servicing drives, etc. Module user programs (MUP) may be any programs or a software package (text editors, work with a database, etc.).

Data exchanges between MCP 10, MM 11 and MDs 12 are performed via the bus 5 of the module 1.

A module may be made so as to enable direct connection of peripherals, for example, its own keyboard or its own connection to the mains.

The following variants may be used for storing MSW on drives.

All MSW is stored on one physical MSWD, i.e., the system has not only a logical MSWD, but also a physical MSWD. This variant presupposes that all MSW is changed when a MSWD drive is changed.

MOS and MUPs are stored on different drives: a MOS is stored on a MSD, and MUPs are stored on a MPD. This variant may be used, for example, for changing only a MOS without changing MUPs.

A MOS and MUP as well as a MDD may be stored each on several physical drives. The claimed PC architecture does not provide for storing each MOS, or all MUPs, or all MDDs on one respective physical drive.

Working files of a user (texts, photos, settings files, etc.) are stored on a module data drive.

An PC implementation variant with hidden, and not accessible for the PC user, MSDs and/or MUPs, when for some or another reason it is necessary to hide some or other software from the user. It is allowed to store MSW and the module working files on one physical drive, but this can be done on the condition that the user is warned about possible harm to the computer safety.

Before the MCP starts executing MSW, that MSW should be loaded into the MM. The proposed PC architecture provides a variant according to which the module memory (both MRAM, and MROM) may be loaded with data from the module software drive only and only when the drive is operated in the read-only mode.

The following variants of MSW loading into the MM exist.

MSW is loaded into the MM in advance by the manufacturer of the module; a part of MSW, for example a MOS, is loaded into the MROM in advance by the manufacturer, and another part, namely MUPs, is loaded into the MRAM from a MSWD before use with the help of the MOS.

All MSW is loaded from the MSWD into the MRAM before use with the help of the MOS.

The hardware possibility of re-loading MSW into the MM may be implemented, i.e., re-loading should not be performed by purely a software method, but only with the use of any mechanical actions of the user, for example, by pressing a corresponding key or a combination of certain keys or buttons.

The specific operation features of individual IODTs:

The possibility of simultaneous operation of certain control IODTs in the active mode with some modules, and, at the same time, other control IODTs with the other modules. For example, the user enters simultaneously data from a keyboard into one program of a module and data into another program of another module with the use of, for example, a mouse, or a joystick, or a keyboard. ,

### Switch module (SND (see Fig.4).

The task of a switch module 17 is to control interaction between I/O devices of some or other modules, for example, the module 1, and I/O devices of the terminal 9.

As a conventional module, the switch module 17 has its own operational system controlling the operation of that switch module (SOS), processor, memory, I/O devices, bus and software. The elements of a switch module, as the elements of a conventional module, may be fully or partially removable. A switch module has all the properties of a conventional module with the implementation of the following additional functions: control of I/O devices of the terminal 9, control of connections between the module 1 and the terminal 9, control and processing of information flows between the module 1 and the terminal 9.

Depending on a computer embodiment, the switch module 17 either may be a removable one connectable to the terminal 9, or installed in the computer as a fixed element. In the case where the SOS is in a removable module, control of the SOS in the manual mode may be carried out either through IODTs, or through its own internal I/O devices. In this case it is possible to change the SOS by changing the SOS module.

A computer may be made in variants according to which a switch module is connected both through a special connector designed just for a switch module, and through a conventional connector for modules. In the latter case a computer (or a system of computers) should recognize a module as a switch module and delegate corresponding powers to it.

### Terminal Module (see Fig.4).

Either terminal 9 may be equipped with its own module (terminal module) 18. The tasks of a terminal module are: control of interaction between the switch 4 and the terminal 9, reception and processing of data flows from the switch 4 and its further transmission directly to IODTs.

As a conventional module, a terminal module 18 has its own operational system controlling operation of that terminal module (TOS). Also, a terminal module has a processor, memory, I/O devices, a bus and software. The elements of a terminal module 18, as the elements of a conventional module, may be fully or partially removable. Depending on a computer embodiment, a terminal module 18 may be both a removable module connectable to a terminal, and that installed as a fixed module.

In the case where a TOS is in a removable module, it may be controlled manually either through IODTs, or through its own internal I/O devices. In this case it is possible to replace the TOS by replacing the TOS module.

A computer may be made in embodiments, wherein a terminal module may be connected to the computer either through a special connector designed just for that terminal module, or through a conventional connector for modules. In the latter case the system should recognize a module as a terminal module and delegate corresponding powers to it.

### Specific features of outputting information on visualizing devices (display units)

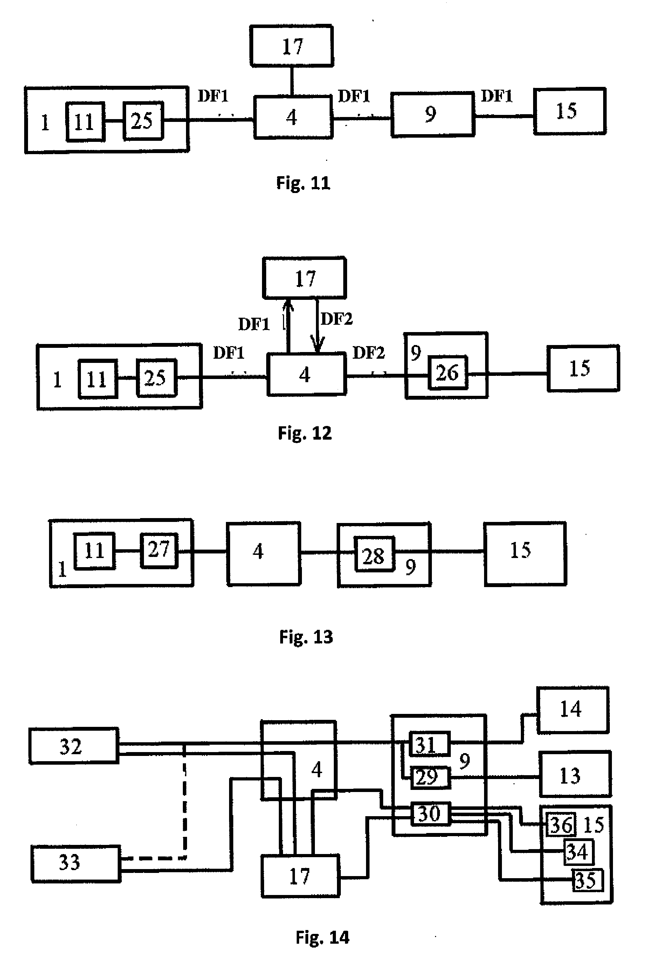

A computer, which is designed according to the claimed architecture, may have several visualizing devices (display units) connected both to a terminal and directly to a module. Display units, which are connected to a terminal, are called main display units. Display units, which are connected directly to modules, are called module display units. Depending on physical embodiment of both modules and terminals, there exist the following modes of outputting information from modules to display units:
output from the memory of a module 11 to a terminal 9 ("module-terminal" output mode, see Fig. 10) presupposes that a data flow DF1, which is intended for outputting to a display unit 15, exits MM 11, then enters, bypassing the switch 4 and the switch module 17 (i.e., not being modified by the switch S and the switch module), a video controller of the terminal 9 and from there to the display unit 15. In this output mode a display unit may visualize information only from one conventional module (full-screen visualization mode);
output from the memory of the module 11 to the module's 1 own video controller 25, and from there directly to the display unit 15 ("module-display" output mode, see Fig. 11), which presupposes that a data flow DF1, which is intended for outputting to the display unit 15, exits the MM 11, enters to the video controller 25 of the module 1, and, bypassing the S 4, goes to the switch module 17 and the display unit 15. In this output mode a display unit may visualize information only from one conventional module (full-screen visualization mode);
output from the memory of the module 11 to the S 4 (being modified in the switch module 17), and from there to the video controller 26 of the display unit 15 ("module-switch" output mode, see Fig. 12), which presupposes that a data flow DF1, which is intended for outputting to the display unit 15, exits the MM 11, then enters the switch module 17 that processes this data and outputs it as DF2 to the video controller 26 of the display unit 15 (and through a terminal module, if available). In this mode of outputting data to the display 15, depending on settings, the S 4 (terminal module 17) may be operated both in the full-screen visualization mode, and in the multiwindow visualization mode (i.e., a display unit visualizes information from several modules);
output from the memory of the module 1 to the intermediate video controller 27 of the module 1 (it does not have its own video controller) and from there to the S 4 (and to the terminal module, or bypassing them), and further to the video controller 26 of the display unit 15. This output mode ("controller-controller" output mode, see Fig. 13) presupposes that a data flow DF1, which is intended for outputting to the display unit 15, exits the MM 11, then enters the intermediate module video controller 27 that forms an intermediate video data flow DF2, then that intermediate video flow DF2 enters S 4 that processes or does not process this data, and then this data is outputted to the video controller 28 of the display unit 15. During this mode of outputting to the display unit 15, depending on settings of the S 4 or the module 1, may be operated both in the full-screen visualization mode, and in the multiwindow visualization mode.

The intermediate video controller 27 is a device that prepares and sends data from the module 1 to the terminal 9 (through the S 4 and the terminal module 18, or bypassing them), and that data enters the conventional video controller 26 of the display unit 15, or the incoming video controller 28 of the display unit.

The incoming video controller 28 of the display unit 15 is a device that, as opposed to the conventional video controllers 26 of the display unit 15, is specially designed for outputting information via the route "the memory 11 of the module - the memory of the intermediate video controller 27 - the video memory of the incoming video controller 28 and from there to the display unit 15", rather than via the route "the memory 11 of the computer - the video memory of the controller" as with conventional video controllers.

Depending on settings of the module, the switch module and the terminal module as well as on embodiments and functionality of the modules and the terminal, different modes of outputting information from the modules to visualizing devices. There exist the direct mode and the stepwise mode for outputting information from modules for visualizing. The direct mode of visualizing combines the modes "module-terminal" and "module-display unit", the stepwise mode combines the modes "module-switch" and "controller-controller".

Operation with module display units is operation with display units connected directly to a module. For this, a module should be provided with its own special video controller exercising control over outputting information to this display unit. The terminal functions may be transferred to a module (or its particular I/O device), and vice versa. Depending on the embodiment of either module, terminal and switch, the possibility of using individual IODMs in IODTs, and vice versa, is provided for. For example, a keyboard connected to a module may be re-routed to a terminal, i.e., may become an I/O device of the terminal and ensure data inputs into other modules. For safety purposes such reconnection should be made with mandatory use of hardware (pressing corresponding buttons, etc.). In a case where only software is used, the user should be warned about it beforehand, since it negatively affects the computer safety. Analogously, reconnection of either IODT to IODM is provided for.

### Carrying-out of the invention, taking one embodiment of the computer appearance and inner arrangement as an example (see Fig. 14).

The computer appearance, as that of a conventional PC, represents a system unit having conventional connectors for I/O devices and additional user-friendly connectors for modules and an operational system module. I/O devices to be connected directly to the system unit are IODTs of this computer. Some modules may have conventional standard connectors for some or other IODMs, for example, a USB-connector for a keyboard, mains connectors, etc.

The switch 4 is included into the structure of the system unit and has the separate removable module 17.

The controllers of all the I/O devices 29, 30, 31 of the terminal 9 are included into the structure of the system unit. These are controllers for the keyboard 13, the mouse 14 and the display unit 15. There is no terminal module. The SOS of this computer is represented by software within the removable module connected to the corresponding connector for the switch module 17.

The following modules are connected to the system unit:

The module 32 or the office-module containing an accounting program and programs for processing documents. The module 32 comprises a connector for connecting to the mains and is connected to a corporate or another network. The software of the module 32 is already loaded in the MM (ROM). The module 32 has invisible drives for the MSW, which are used for loading the software into the ROM, but the user may not view and copy some or other programs on the drives. The module 32 also has a RAM and a data drive with removable carrier accessible only by the software of this module.

The module 33 or the Internet-module comprising a program for working in the Internet as well as a mail client. The module 33 has a connector for connecting to the mains and is connected to the Internet. The software of the module 33 is preliminarily loaded into the MM (ROM). The module 33 has visible drives for the MSW which are used for loading the software into the ROM. The user may view the MSWD, but may not delete or modify them, since these drives operate in the read-only mode. The MPD has a removable disc that may be replaced together with changing MUPs (module user programs) by reloading it into the ROM. The module also has the RAM and data drive with a removable carrier accessible only by the software of this module.

The following devices are connected to the terminal 9: the display unit 15, the keyboard 13, the mouse 14.

The output on the screen of the display unit 15 is carried out in the mode "module-switch", i.e., the user can see several windows 34, 35, 36 on the screen. For example, five windows are open on the screen:
the window 36 from the office-module 32 where an accounting program, which is loaded into the office-module ROM, works. This program exchanges data with the data drive (DD) of this module and receives data via a network from a similar office-module of another computer;
the window 34 from the office-module 32 where a text editor, which is loaded in the office-module ROM, works. This editor exchanges data with the DD of this module. A text, which is processed by this editor, may be a result of the accounting program work. The editor may receive data via a network from another office-module of another computer;
the window 35 from the Internet-module 33 where a browser for the Internet works. This browser program is loaded in the ROM of the Internet-module 33 and exchanges data with the Internet;
a window (not shown) from the Internet-module 33 where a mail client program works. This program is loaded in the ROM of the Internet-module 33 and exchanges data with the Internet;
a window (not shown) from the operational system module of the whole system (SOS, not shown), wherein data on work of the modules is visualized.

Critical data that should be protected against destruction, modification or unauthorized viewing by malicious programs (viruses, Trojans, etc.) is, for example, on the data drive of the office-module 32.

Safety of critical data in respect of unauthorized access via the Internet is ensured by that the Internet-module 33 has no physical possibility of obtaining access to data of the office-module 32:
a page containing malicious information may be loaded through an Internet browser, but a loaded virus has no possibility of accessing data contained only in the lnternet-module 33;
a virus even has no possibility of making a screenshot of the display unit 15, because information enters into the video controller 30 of the display unit 15 from the MOS, so a virus has no access to the video memory of the video controller 30 of the display unit 15.

The MSW does not provide for work of interpreter programs. An accounting program is software (protected software) that is installed on a computer which user decided to protect it against unauthorized copying. The protection of the protected software is ensured due to the fact that the software drive of the office-module 32 is on the invisible drives of this module 32, and, consequently, a user has no possibility of copying that software.

The only method of copying this protected software in an unauthorized way is to disassemble the module 32 for the purpose of physically remove the memory and the software drive from it. However, even this may be very successfully prevented by the use of special systems of hardware encrypting/decrypting information written on the software drive and in the MROM, using devices that harm the software drive and the module memory hopelessly in an attempt to open them and other methods that significantly hampering and raising costs of a process of unauthorized copying of the protected software of this module 32.

### Variants for protecting a computer designed according to the claimed architecture against various types of viruses and against various actions harmful for the user

According to the approach of module self-containment, a virus infecting one module does not have the possibility of affecting (by software method) another module.

The use of this approach is the main method for protecting a computer against viruses, because the user have the possibility of installing most valuable programs as individual modules and, thus, separate them and information both from each other and from other programs and information installed in other modules which protection is not so important for the user, if at all.

For example, if the user practices buying via the Internet and, respectively, critical information is stored somewhere in the user's computer (about a user's credit card, passwords, etc.) and its possession may harm the user in some or another way, then it is advisable that the user has a separate module containing only a separate and special variant of an Internet browser which, preferably, does not contain any interpreter programs and no other work programs (MUPs).

Taking into account all the above, all further techniques for protecting a computer with the help of the claimed architecture describe methods relating to protection of either module.

All the variants of protection, which are described below, presuppose that initially (at the stage of making a module) module software does not have any viruses (the approach of a module reliable supplier).
1. Protection against viruses infecting computer software (program viruses). Before a module starts operating (the approach of pre-loading), a program is already loaded into the module memory. It means that, if the module software does not contain virus of this type initially (the approach of a module reliable supplier), then viruses of this type have no possibility of infecting the computer memory and perform any actions malicious to the user.
2. Protection against viruses using interpreter programs (macro-viruses). The MSW supplier should provided for the user forced control of especially important operations of script programs, such as file operations and data exchanges with networks (the approach of limiting the operation of interpreters). In accordance with this approach, a supplier of module software may subdivide interpreter commands into dangerous and non-dangerous and then intercept dangerous commands, allowing or not allowing to use then, including work of the user in the manual mode. An interpreter should not comprise any commands that may alter control parameters for interpreter commands.

Also, a module supplier should warn the user about the fact that the MSW comprises interpreter programs and give the user the possibility of enabling or disabling such programs manually in some or other cases or for some or other file types. The user should also be warned about the presence of macro-commands in either file and have the possibility of disabling them for either file or file type (or for variants wherein such files may enter a module, for example, of disabling macro-commands for files coming from networks (the Internet, e-mail, etc.) or for files copied to a module from removable carriers).
3. Protection of critical data against unauthorized entry via the Internet or other networks. In accordance with the main approach of computer protection, critical data and programs that do not work with such data should not be in one and the same module, further, the presence of critical data and programs for working in networks (the Internet), especially containing interpreter programs, should be avoided.
4. Protection of critical data used by the user during Internet sessions. If critical data is needed just for using it in networks (such as the Internet), then the user should behave as described above. Namely: it is desirable for the user to have a separate module comprising only a separate and special version of a browser program for the Internet (desirably, containing no interpreter programs) and no other work programs (MUPs) in that module. Further, it is advisable to use the approach of limiting the operation of interpreters.
5. Protection against information mailing, if unauthorized by the user, over networks from the user's computer. In accordance with the approach of pre-loading, program viruses have no possibility of performing this malicious action. This possibility is available for macro-viruses only, therefore the approach of limiting the operation of interpreter programs should be used.
6. Protection against viruses spreading via e-mail. As in the previous case, a program virus cannot perform any malicious actions in accordance with the approach of pre-loading. Macro-viruses spreading via e-mail should be neutralized by using the approach of limiting the operation of interpreter programs.

Some variants for protecting software written for a PC made according to the claimed architecture are as follows.
1. The use of invisible drives. The use of invisible drives and impossibility of connecting any control IODMs and visualizing IODMs, as provided for by the manufacturer, to a given module does not give the user the possibility of copying MSW written to that drive (the approach of using invisible drives).
2. The use of the approach of pre-loading. MSW may be pre-loaded into the module memory by the manufacturer, and in such a case a copy of that MSW is absent from the module drives. This prevents the user from copying MSW.
3. The use of limitations in module software. MSW also may not allow the user to perform certain operations with the MSW files, for example, to view the MSW files, copy them, etc. This approach is called "the approach of limitations in the module software".
4. The use information encryption in a module. Data encryption of MSW drives and its decryption at the time of loading into the module memory may be provided for (the approach of MSWD encryption). The compliance with this approach significantly hampers data extraction from a module by physically extracting components from such a module.
5. The use of technologies checking module integrity. It can significantly hamper data extraction from a module by physically extracting components from a module. According to the approach of using technologies checking module integrity, such technologies check the integrity of module individual components (for example, its housing, some enclosure of individual microchips, etc.), and if the integrity is violated, information (all or its part - for example, MSW) is made inaccessible for the violator. For example, a written multi-bit code, which is used for information encryption, may be deleted.

Optimal use of the computer processor and memory capacities.

Conventional computers according to the Von Neumann architecture are made potentially for any programs. Consequently, situations are possible, and they do occur, where the processor capacity, the computer memory and other equipment, for example, a video adapter, are not used to the fullest extent, or capacity of the installed equipment is not sufficient for a given software product.

According to the proposed architecture, since each module is intended for functioning of particular programs, there exists the possibility of optimally selecting necessary equipment for a module and such programs, and use it to the fullest extent.

Thus, the claimed computer architecture provides the reliable preventive protection of a computer against spreading viruses, excludes destruction of programs and files, prevents leakage of confidential information and other consequences of virus harmful actions, up to full exclusion of virus harmful effects to a computer, enables to significantly hamper unauthorized copying software for a given PC, and gives the possibilities of selecting for making and of using a central processor, memory and other equipment of a computer in a more optimal way.

### Inscriptions on the Drawings

Fig. 1
   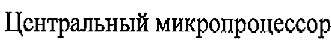 = Central microprocessor
   AJIY = Arithmetic and logic unit (ALU)
   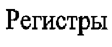 = Registers
   yy = Control unit (CU)
   Cxema 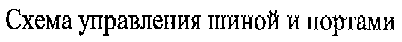 = Bus and port control circuit
   O3y = RAM
   ΠΠ3y = ROM
   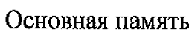 = Main memory
   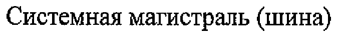 = System backbone (bus)
   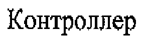 = Controller
   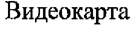 = Video card
   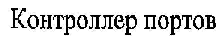 = Port controller
   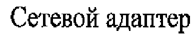 = Network adapter
   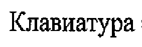 = Keyboard
   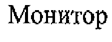 = Monitor
   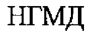 = Floppy drive (FDD)
   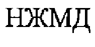 = Hard disc drive (HDD)
   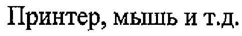 = Printer, mouse, etc.
   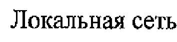 = Local area network
Fig. 10, 11, 12
   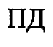 = Data flow (DF)

## Claims

1. A computer architecture with self-contained modules, comprising processors, memory, programs and data storage drives, and peripherals, **characterized in that** the architecture represents N self-contained modules connected through one or N switches via a bus corresponding to the respective module to the bus of one or N terminals, wherein each module comprises a central processor, main memory, drives, I/O devices, peripherals, a bus and software, each terminal comprises I/O devices and peripherals connected to the terminal bus, each module exchanging data only with a terminal or N terminals that can be cooperated with through a switch or N switches, where N=2, 3, 4...

2. A computer architecture according to Claim 1, **characterized in that** only those programs, which are initially, before a module starts operating, included into that module software, may be loaded into the module main memory.

3. A computer architecture according to Claim 1, **characterized in that** a switch or N switches operate under control of a switch module or N switch modules.

4. A computer architecture according to Claim 1, **characterized in that** a terminal or N terminals operate under control either of a switch module or N switch modules, or a terminal module or N terminal modules.

5. A computer architecture according to Claim 1, **characterized in that** a module is connected to a terminal through a switch, and data exchanges between that module and that switch are performed by way of direct connection between the module bus and the terminal bus and/or through a gateway arranged in the switch that processes data received from the module and sends it to the terminal as well as processes data received from the terminal and sends it to the module.

6. A computer architecture according to Claim 1, **characterized in that** the module I/O devices include I/O devices accessible only by the terminal I/O devices and I/O devices not accessible by the terminal I/O devices, wherein the module I/O devices, which are not accessible by the terminal I/O devices, may be accessible by the I/O devices of that module only.

7. A computer architecture according to Claim 1, **characterized in that** a terminal I/O device comprises drives which data is accessible by software of some or other modules having access to that terminal.

8. A computer architecture according to Claim 1, **characterized in that** the terminal functions are delegated to a certain module or to its I/O devices.

9. A computer architecture according to Claim 1, **characterized in that** the module bus and the terminal bus consist of several parallel channels over which data for different types of I/O devices is transferred in parallel.

10. A computer architecture according to Claim 1, **characterized in that** the module is equipped with an intermediate video controller preparing and sending data from the module to the terminal to a standard or incoming video controller of a visualizing device.

11. A computer architecture according to Claim 10, **characterized in that** the terminal is equipped with an incoming video controller of a visualizing device receiving information from the intermediate video controller of the module.

12. A computer architecture according to Claim 1, **characterized in that** modules may be connected to the system by a wire method and/or a wireless method.

13. A computer architecture with self-contained modules, comprising processors, memory and data stored on drives, and peripherals, **characterized in that** the architecture represents N self-contained modules connected through one or N switches via a bus corresponding to the respective module to the bus of one or N terminals, wherein each module comprises a central processor, main memory, drives, I/O devices, peripherals, a bus and software, each terminal comprises I/O devices and peripherals connected to the terminal bus, each module exchanging data only with a terminal or N terminals that can be cooperated with through a switch or N switches, where N-2,3,4..., software intended for loading into the module main memory for execution being fully or partially stored on drives that are in the hardware read-only mode during the module operation.

14. A computer architecture according to Claim 13, **characterized in that** only those programs, which are initially, before a module starts operating, included into that module software, may be loaded into the module main memory.

15. A computer architecture according to Claim 13, **characterized in that** a switch or N switches operate under control of a switch module or N switch modules.

16. A computer architecture according to Claim 13, **characterized in that** a terminal or N terminals operate under control either of a switch module or N switch modules, or a terminal module or N terminal modules.

17. A computer architecture according to Claim 13, **characterized in that** a module is connected to a terminal through a switch, and data exchanges between that module and that switch are performed by way of direct connection between the module bus and the terminal bus and/or through a gateway arranged in the switch that processes data received from the module and sends it to the terminal as well as processes data received from the terminal and sends it to the module.

18. A computer architecture according to Claim 13, **characterized in that** the module I/O devices include I/O devices accessible only by the terminal I/O devices and I/O devices not accessible by the terminal I/O devices, wherein the module I/O devices, which are not accessible by the terminal I/O devices, may be accessible by the I/O devices of that module only.

19. A computer architecture according to Claim 13, **characterized in that** a terminal I/O device comprises drives which data is accessible by software of some or other modules having access to that terminal.

20. A computer architecture according to Claim 13, **characterized in that** the terminal functions are delegated to a certain module or to its I/O devices.

21. A computer architecture according to Claim 13, **characterized in that** the module bus and the terminal bus consist of several parallel channels over which data for different types of I/O devices is transferred in parallel.

22. A computer architecture according to Claim 13, **characterized in that** the module is equipped with an intermediate video controller preparing and sending data from the module to the terminal to a standard or incoming video controller of a visualizing device.

23. A computer architecture according to Claim22, **characterized in that** the terminal is equipped with an incoming video controller of a visualizing device receiving information from the intermediate video controller of the module.

24. A computer architecture according to Claim 13, **characterized in that** modules may be connected to the system by a wire method and/or a wireless method.

25. A computer architecture with self-contained modules, comprising processors, memory, programs and data stored on drives, and peripherals, **characterized in that** the architecture represents N self-contained modules connected through one or N switches via a bus corresponding to each module to the bus of one or N terminals, wherein each module comprises a central processor, main memory, drives, I/O devices, peripherals, a bus and software, each terminal comprises I/O devices and peripherals connected to the terminal bus, each module exchanging data only with a terminal or N terminals that can be cooperated with through a switch or N switches, where N=2, 3,4..., the module software being fully or partially loaded into the part of the module main memory before it starts operating, which is used in the read-only mode during the module operation, a part of the software, which is not loaded into the module main memory used during the module operation in the read-only mode, is loaded into the module RAM in advance, before the module starts operating, or is loaded into the module RAM during the module operation, or is partially loaded into the module RAM before the module starts operating and is partially loaded into the module RAM during the module operation.

26. A computer architecture according to Claim 25, **characterized in that** the module software intended for loading into the module memory before the module starts operating is stored on drives being in the hardware read-only mode during the module operation.

27. A computer architecture according to Claim 25, **characterized in that** the module software intended for loading into the module memory in advance, before the module starts operating, is stored on drives that are used for pre-loading of the module software into the module memory only before the module starts operating.

28. A computer architecture according to Claim 25, **characterized in that** only those programs, which are initially, before a module starts operating, included into that module software, may be loaded into the module main memory.

29. A computer architecture according to Claim 25, **characterized in that** a switch or N switches operate under control of a switch module or N switch modules.

30. A computer architecture according to Claim 25, **characterized in that** a terminal or N terminals operate under control either of a switch module or N switch modules, or a terminal module or N terminal modules.

31. A computer architecture according to Claim 25, **characterized in that** a module is connected to a terminal through a switch, and data exchanges between that module and that switch are performed by way of direct connection between the module bus and the terminal bus and/or through a gateway arranged in the switch that processes data received from the module and sends it to the terminal as well as processes data received from the terminal and sends it to the module.

32. A,computer architecture according to Claim 25, **characterized in that** the module I/O devices include I/O devices accessible only by the terminal I/O devices and I/O devices not accessible by the terminal I/O devices, wherein the module I/O devices, which are not accessible by the terminal I/O devices, may be accessible by the I/O devices of that module only.

33. A computer architecture according to Claim 25, **characterized in that** a terminal I/O device comprises drives which data is accessible by software of some or other modules having access to that terminal.

34. A computer architecture according to Claim 25, **characterized in that** the terminal functions are delegated to a certain module or to its I/O devices.

35. A computer architecture according to Claim 25, **characterized in that** the module bus and the terminal bus consist of several parallel channels over which data for different types of I/O devices is transferred in parallel.

36. A computer architecture according to Claim 25, **characterized in that** the module is equipped with an intermediate video controller preparing and sending data from the module to the terminal to a standard or incoming video controller of a visualizing device.

37. A computer architecture according to Claim36, **characterized in that** the terminal is equipped with an incoming video controller of a visualizing device receiving information from the intermediate video controller of the module.

38. A computer architecture according to Claim 25, **characterized in that** modules may be connected to the system by a wire method and/or a wireless method.
